# EUROPÄISCHE PATENTSCHRIFT

(11) **EP 2 414 157 B1**
(45) Veröffentlichungstag und Bekanntmachung des Hinweises auf die Patenterteilung: **11.09.2019**
(21) Anmeldenummer: 10702128.9
(22) Anmeldetag: 02.02.2010
(51) Int. Cl.: B32B 25/08, B32B 25/10, B32B 27/08, B29C 65/00, B29C 65/50, D06N 3/10, B29K 311/10, B29K 105/08, B29K 267/00, B29C 65/48, B29K 305/00, B32B 5/02, B32B 7/12, B29C 35/02, B29K 21/00, B29K 27/18, B32B 25/14, B29L 9/00, B29K 277/00, B32B 27/32

(54) **MEMBRAN, INSBESONDERE GASSPEICHERMEMBRAN**
MEMBRANE, IN PARTICULAR A GAS STORAGE MEMBRANE
MEMBRANE, EN PARTICULIER MEMBRANE D'ACCUMULATEUR DE GAZ

(30) Priorität: 30.03.2009 DE 102009003696
(43) Veröffentlichungstag der Anmeldung: 08.02.2012
(73) Patentinhaber: ContiTech Elastomer-Beschichtungen GmbH, 30165 Hannover (DE)
(72) Erfinder: STORRE, Jens, 37176 Nörten-Hardenberg (DE); BLOMEYER, Karl-Heinz, 37194 Bodenfelde (DE); PAPADIMITRIOU, Alexander, 37154 Northeim (DE)
(74) Vertreter: Finger, Karsten
(86) Internationale Anmeldenummer: PCT/EP2010/051228
(87) Internationale Veröffentlichungsnummer: WO 2010/112249

(56) Entgegenhaltungen:
- DE-A1- 4 446 304
- DE-A1-102004 031 335
- JP-A- 59 033 375
- US-A- 5 217 797
- DATABASE WPI Week 198915 Thomson Scientific, London, GB; AN 1989-109335 XP002583385 -& JP 01 053830 A (MITSUI KENSETSU KK) 1. März 1989 (1989-03-01)
- DATABASE WPI Week 200446 Thomson Scientific, London, GB; AN 2004-487852 XP002583541 -& WO 2004/052627 A1 (DAIKIN IND LTD) 24. Juni 2004 (2004-06-24)

## Beschreibung

Die Erfindung betrifft eine Membran, insbesondere eine Gasspeichermembran.

Membranen werden dort eingesetzt, wo zwei gleiche oder verschiedene Medien flexibel getrennt werden oder aber gegeneinander abgedichtet werden sollen.
Insbesondere Membranen, die zur Trennung oder zur Abdichtung gegenüber gasförmigen Medien eingesetzt werden, müssen verschiedene, dem jeweiligen Medium angepasste, Eigenschaften besitzen. Wenn zum Beispiel Druckgase von Flüssigkeiten flexibel getrennt werden sollen, ist es wichtig, dass der Druck im Gas erhalten bleibt. Daher muss eine solche Membran möglichst undurchlässig für Gase sein.

Um einem Hinausdiffundieren des Gases aus einer Gaskammer entgegenzuwirken, ist es bekannt, die Membran möglichst undurchlässig für Gase, insbesondere für Stickstoff, auszubilden. So ist es beispielsweise aus der DE 42 43 652 A1, der DE 41 17 411 C2 und der DE 36 38 828 A1 bekannt, die Membran aus Elastomerschichten mit einer Gassperrschicht, auch Barriereschicht genannt, zu versehen. Als Gassperrschichten kommen dabei z. B. Schichten aus Polyamid, Polyvinylalkohol oder Ethylen-Vinylalkohol-Copolymeren in Frage. Membranen mit solchen Gassperrschichten haben eine verhältnismäßig geringe Lebensdauer, d.h. zeigen bei längerem Gebrauch oft eine bleibende Dehnung der Membran, da sich die Gassperrschicht in der Regel nicht elastisch wie die umgebenden Elastomerlagen verhält und daher in eine bleibende Dehnung übergeht.

Eine erhöhte Lebensdauer von Membranen für Membranpumpen oder Membranventile, die PTFE enthalten, ist aus DE 44 46 304 A1 bekannt. Hierbei wird die PTFE-Schicht direkt mit einer Gewebeschicht durch Heißpressen verbunden. Die Lebensdauer in DE 44 46 304 A1 bezieht sich allerdings nicht auf die Gasdichtigkeit, sondern auf Last- und Biegewechsel, wie sie für Membranpumpen oder Membranventile benötigt werden.

Membranen zum Abdichten von großvolumigen Behältern, wie sie z.B. in Biogasanlagen benötigt werden, sind z.B. aus DE 20 2007 007 060 U1 und EP 1 746 336 A1 bekannt. Zur Erhaltung der Lebensdauer, d.h. zur Reduzierung bzw. Vermeidung von Beschädigungen, einer solchen Gasspeichermembran ist in DE 20 2007 007 060 U1 das Anbringen einer verschließbaren Außen-Durchgangsöffnung zur Über- und Unterdrucksicherung vorgesehen. Um z.B. ein Zerreißen einer Gasspeicherfolie im Außenbereich zu vermeiden, wird in EP 1 746 336A1 das Anbringen eines zusätzlichen Netzes beschrieben.
Bei beiden handelt es sich im Wesentlichen um eine Maßnahme zur Erhaltung der mechanischen Lebensdauer und nicht zur Erhaltung der chemischen Lebensdauer bzw. der chemischen Beständigkeit.

Der Erfindung liegt daher die Aufgabe zu Grunde, eine flexible Membran, insbesondere eine flexible Gasspeichermembran, bereitzustellen, die sich durch eine gute chemische Beständigkeit und durch eine hohe Lebensdauer mit verbesserter wirtschaftlicher Nutzung auszeichnet.

Gelöst wird diese Aufgabe erfindungsgemäß durch eine Membran, die dadurch gekennzeichnet ist, dass sie aus wenigstens zwei einzelnen Membranbahnen besteht, die durch wenigstens eine Nahtkonstruktion miteinander verbunden sind, wobei jede einzelne Membranbahn wenigstens eine Elastomerschicht und wenigstens eine Außenschicht auf der Basis von PTFE.

"PTFE-Basis" bedeutet im Sinne der vorliegenden Erfindung Polytetrafluorethylen (PTFE), modifiziertes Polytetrafluorethylen (TFM), Fluorethylenpolymer (FEP), Perfluoralkylvinylether-Tetraethylen-Copolymer (PFA) oder Ethylen-Tetrafluorethylen-Copolymer (ETFE). Bevorzugt handelt es sich hierbei um PTFE oder TFM.

Überraschenderweise hat sich gezeigt, dass eine solche Membran, insbesondere eine solche Gasspeichermembran, durch eine gute Gasdichtigkeit und vor allem durch eine erhöhte Lebensdauer und dadurch bedingt eine verbesserte wirtschaftliche Nutzung auszeichnet.

Die erfindungsgemäße Membran kommt bevorzugt zum Abdichten von Koksofengasen, auch als Kokereigasen bezeichnet, und hier bevorzugt in Gasspeicheranlagen vom Wiggins-Typ zum Einsatz.

Ein weiterer Vorteil besteht darin, dass die Umweltbelastung signifikant reduziert wird, so dass kontaminierte Dicht-Öle nicht mehr entsorgt werden müssen, so dass Pumpenstationen für das ständige Umwälzen des Dicht-Öls entfallen können.
Des Weiteren stellt eine derartige Membran ein elastisches System mit einer guten Rückstellkraft dar, die ohne mechanische und chemische Einbußen flexibel auf verschiedene Gasvolumina und Gasdrücke reagieren kann.

Koksofengas enthält im Wesentlichen Wasserstoff, Methan, Stickstoff, Kohlenmonoxid, Kohlendioxid, Schwefelwasserstoff, Ammoniak, niedere und höhere Kohlenwasserstoffe. Es wird durch Pyrolyse von Steinkohle erzeugt. Da Steinkohle als Ausgangsmaterial ein in seinen Bestandteilen schwankendes Naturprodukt ist, ist auch die Zusammensetzung des Koksofengases jeweils unterschiedlich, aber immer derart aggressiv, dass es für ein Lebewesen, Mensch oder Tier, beim Einatmen oder Kontakt über die Haut meist tödlich ist.

Diese Aggressivität zeigt sich auch dadurch, dass ein Teil der Koksofengase durch eine Membran, welche nur aus Elastomer- und gegebenenfalls aus einer Gelege-, Gewebe- oder Gewirkeschicht aufgebaut ist, zum Einen diffundieren kann und zum Anderen diese Schichten zerstören kann.
Wird lediglich nur eine Folie auf PTFE-Basis als Membran zum Abdichten verwendet, so ergeben sich zum Einen extrem hohe Kosten, keine Dehnungsfestigkeit bei geringerer Gesamtfestigkeit und zum Anderen keine Stabilisierung des Stempels im Gasspeicher z.B. gegenüber Tordieren.

Die erfindungsgemäße Membran besteht daher aus wenigstens zwei einzelnen Membranbahnen, die durch wenigstens eine Nahtkonstruktion miteinander verbunden sind, wobei jede einzelne Membranbahn wenigstens eine Elastomerschicht und wenigstens eine Außenschicht, welche auf PTFE-Basis ist, enthält.

Die Anzahl der Schichten innerhalb der einzelnen Membranbahn beträgt bevorzugt zwischen zwei und sechs, in einer besonders bevorzugten Ausführungsform hat die einzelne Membranbahn vier Schichten.

Es hat sich als vorteilhaft gezeigt, wenn die einzelne Membranbahn wenigstens eine Elastomerschicht und wenigstens eine Außenschicht, welche auf PTFE-Basis ist, und wenigstens eine Gelegeschicht oder Gewebeschicht oder Gewirkeschicht enthält, wobei die Gelegeschicht oder Gewebeschicht oder Gewirkeschicht auf wenigstens einer Seite mit einer Elastomerschicht verbunden ist.

Die Elastomerschicht ist bevorzugt eine Kautschukmischung auf der Basis von Chloroprenkautschuk und / oder Ethylen-Propylen-Kautschuk und / oder Ethylen-Propylen-Dien-Kautschuk und / oder Nitrilkautschuk und / oder Halonitrilkautschuk und / oder Fluorkautschuk und / oder Silikonkautschuk und / oder chloriertem Polyethylen und / oder chlorsulfoniertem Polyethylen. Der Mengenanteil des genannten Kautschuks bzw. der genannten Kautschuke beträgt vorteilhafterweise 50 bis 100 phr.
Bevorzugt handelt es sich hierbei um 50 bis 100 phr Chloroprenkautschuk.
Die Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Kautschukmischung vorhandenen Kautschuke bezogen.
Die Schichtdicke der Elastomerschicht beträgt 0,2 bis 1,3 mm, bevorzugt 0,4 bis 1,0 mm. Wird mehr als eine Elastomerschicht verwendet, so können diese entweder gleiche oder aber unterschiedliche Schichtdicken haben. Ebenso kann bei Vorhandensein von mehr als einer Elastomerschicht die qualitative und / oder die quantitative Zusammensetzung der einzelnen Elastomerschichten gleich oder unterschiedlich sein.

Die Gelegeschicht oder Gewebeschicht oder Gewirkeschicht besteht vorzugsweise aus Polyamidgarn und / oder Polyestergarn und / oder Aramidgarn und / oder Baumwollgarn und / oder Glasfasern und / oder Metallgarn, wobei Polyamidgarn besonders bevorzugt ist. Die Schichtdicke der Gelegeschicht oder Gewebeschicht oder Gewirkeschicht beträgt bevorzugt 0,1 bis 0,5 mm, besonders bevorzugt 0,2 bis 0,4 mm, während die Schichtdicke der Außenschicht, welche auf PTFE-Basis ist, bevorzugt 0,05 bis 0,5 mm, besonders bevorzugt 0,1 bis 0,3 mm, beträgt.
Wird mehr als eine Gelegeschicht oder Gewebeschicht oder Gewirkeschicht verwendet, so können diese entweder gleiche oder aber unterschiedliche Schichtdicken haben. Ebenso können bei Vorhandensein von mehr als einer Gelegeschicht oder Gewebeschicht oder Gewirkeschicht diese aus jeweils gleichen oder verschiedenen der genannten Materialien bestehen.

Vorteilhaft ist es ferner, wenn die Außenschicht, welche auf PTFE-Basis ist, beidseitig geätzt ist. Das beidseitige Ätzen der Außenschicht ermöglicht aufgrund der guten chemischen Anbindung eine beständige Nahtkonstruktion und sehr geringe Schichtdicken. Letzteres ergibt die Möglichkeit zu einer reversiblen Dehnung auch der Außenschicht und verhindert bei einer solchen Dehnung eine Ablösung der Außenschicht von der Elastomerschicht oder von einer Gelegeschicht oder Gewebeschicht oder Gewirkeschicht. Die hervorragende Abschirmung der Außenschicht gegenüber insbesondere den aggressiven Koksofengasen wird durch das beidseitige Ätzen nicht beeinflusst.
Die Außenschicht kann dabei durch alle der fachkundigen Person bekannten Ätzverfahren beidseitig geätzt sein.

Ebenso kommt der Nahtkonstruktion einer Membran, welche insbesondere für Gasspeicher verwendet wird, eine große Bedeutung zu. Der fachkundigen Person ist bekannt, dass die Nahtstellen, welche üblicherweise überlappend ausgebildet sind und kalt verklebt und / oder verschweißt werden, eine der wesentlichen Schwachstellen einer Membran darstellen. Die Membran zeichnet sich zweckmäßigerweise durch eine besondere Nahtkonstruktion aus. Diese Nahtkonstruktion ist aus wenigstens zwei einzelnen auf Stoß aneinander gelegten Membranbahnen aufgebaut, wobei gleichartige Schichten der einzelnen Membranbahnen jeweils auf Stoß aneinander gelegt sind, wobei die beiden Membranbahnen auf der einen Außenseite der Membran, auf der jeweils die Elastomerschichten der einzelnen Membranbahnen auf Stoß aneinander gelegt sind, diese über eine aufliegende Platte und über eine erste Kautschukmatrix miteinander verbunden sind und auf der anderen Außenseite, auf der jeweils die Außenschichten der einzelnen Membranbahnen auf Stoß aneinander gelegt sind, diese über eine aufliegende Schicht, welche auf PTFE-Basis ist, und über eine zweite Kautschukmatrix miteinander verbunden sind.

Die Gesamtschichtdicken der einzelnen Membranbahnen sollten, da sie auf Stoß gelegt sind, gleich sein.

Es ergibt sich von selbst, dass jeweils die Breite der aufliegenden Platte und die Breite der aufliegenden Schicht geringer sein muss, als die Breite der einzelnen Membranbahnen, ausgehend von der schmalsten Membranbahn.

Hier hat es sich als vorteilhaft gezeigt, wenn die Breite der aufliegenden Platte und / oder die Breite der aufliegenden Schicht jeweils zwischen 2 bis 20 cm, bevorzugt zwischen 5 und 15 cm, beträgt.

Die aufliegende Platte ist in einer bevorzugten Ausführungsform vulkanisiert oder unvulkanisiert. Vorteilhafterweise ist sie allerdings unvulkanisiert.

Es ist weiterhin vorteilhaft, wenn Zusammensetzung und Aufbau der aufliegenden Platte der Zusammensetzung und / oder dem Aufbau von wenigstens einer Membranbahn entsprechen. Die Dicke der aufliegenden Platte kann gleich oder unterschiedlich der Gesamtdicke der einzelnen Membranbahnen abzüglich der Außenschicht sein.

Die aufliegende Schicht besteht in einer besonderen Ausführungsform aus Polytetrafluorethylen (PTFE) oder modifiziertem Polytetraflurethylen (TFM). Die Material und / oder Schichtdicke der aufliegenden Schicht können jeweils gleich oder unterschiedlich des Materials und / oder der Schichtdicke der Außenschicht sein. Es ist vorteilhaft, wenn wenigstens das Material der aufliegenden Schicht gleich dem Material der Außenschicht ist.

Die aufliegende Schicht ist beidseitig geätzt. Das beidseitige Ätzen der aufliegenden Schicht ermöglicht aufgrund der guten chemischen Anbindung eine beständige Nahtkonstruktion und sehr geringe Schichtdicken. Letzteres ergibt die Möglichkeit zu einer reversiblen Dehnung der aufliegenden Schicht und verhindert bei einer solchen Dehnung eine Ablösung der aufliegenden Schicht von der zweiten Kautschukmatrix und / oder der Außenschicht.

Die hervorragende Abschirmung der aufliegenden Schicht gegenüber insbesondere den aggressiven Koksofengasen wird durch das beidseitige Ätzen nicht beeinflusst.

Die aufliegende Schicht kann dabei durch alle der fachkundigen Person bekannten Ätzverfahren beidseitig geätzt sein.

Die Kautschukmatrices der ersten Kautschukmatrix und der zweiten Kautschukmatrix enthalten bevorzugt Chloroprenkautschuk und / oder Ethylen-Propylen-Kautschuk und / oder Ethylen-Propylen-Dien-Kautschuk und / oder Nitrilkautschuk und / oder Halonitrilkautschuk und / oder Fluorkautschuk und / oder Silikonkautschuk und / oder chloriertes Polyethylen und / oder chlorsulfoniertes Polyethylen. In einer besonders bevorzugten Ausführungsform enthält die Kautschukmatrix der zweiten Kautschukmatrix Fluorkautschuk (FKM).
Die jeweiligen Zusammensetzungen der beiden Kautschukmatrices können hierbei qualitativ und / oder quantitativ gleich oder verschieden sein.

Vorteilhaft ist weiterhin, wenn die aufliegende Platte an der auf die einzelnen Membranbahnen zugewandten Seite frei von Materialien auf PTFE-Basis ist.

Die neue Membran ist bevorzugt hohlzylinderartig oder torusartig oder konusartig gestaltet, mit einem Gesamtumfang von 5 bis 300 m, bevorzugt von 10 bis 200 m. Möglich ist allerdings auch eine Kombination der genannten Formen.

Die Herstellung der Membran umfasst wenigstens folgende Verfahrensschritte:
- Herstellen von wenigstens zwei einzelnen Membranbahnen, wobei die Außenschicht, welche auf PTFE-Basis ist, der einzelnen Membranbahn, während der Vulkanisation der einzelnen Membranbahn, in Form einer Folie aufgebracht wird;
- Vulkanisation der einzelnen Membranbahn;
- Auf Stoß aneinander Legen der einzelnen vulkanisierten Membranbahnen, wobei gleichartige Schichten der einzelnen vulkanisierten Membranbahnen jeweils auf Stoß aneinander gelegt werden;
- Verbinden der einzelnen vulkanisierten Membranbahnen über eine Nahtkonstruktion derart, dass auf der einen Außenseite der Membran, auf der jeweils die Elastomerschichten der einzelnen Membranbahnen auf Stoß aneinander gelegt sind, eine Platte und eine erste Kautschukmatrix aufgebracht werden und auf der anderen Außenseite, auf der jeweils die Außenschichten, welche auf PTFE-Basis sind, der einzelnen Membranbahnen auf Stoß aneinander gelegt sind, eine Schicht, welche auf PTFE-Basis ist, und eine zweite Kautschukmatrix aufgebracht werden;
- Vulkanisation der Nahtkonstruktion durch Heißpressen.

Vorteilhaft ist es hierbei, wenn die Vulkanisation der einzelnen Membranbahn und / oder die Vulkanisation der Nahtkonstruktion bei einer Temperatur zwischen 140 und 190 °C stattfindet bzw. stattfinden.

Durch das obig beschriebene Verfahren wird eine Nahtkonstruktion erzielt, die eine vulkanisierte Verbindung zwischen den einzelnen Membranbahnen ermöglicht, so dass an diesen Stellen nahezu kein Festigkeitsverlust existiert und eine potentielle Dehnung im Wesentlichen über die Fläche der Membran realisiert wird.

Bei Verwendung der erfindungsgemäßen Membran, insbesondere als Gasspeichermembran, zum Abdichten gegenüber Koksofengasen, ist die Seite der Membran, welche Materialien auf PTFE-Basis enthält, die dem Gas oder dem Gasgemisch zugewandte Seite.

Die Erfindung wird nun anhand eines Ausführungsbeispiels unter Bezugnahme auf schematische Zeichnungen erläutert. Es zeigen:

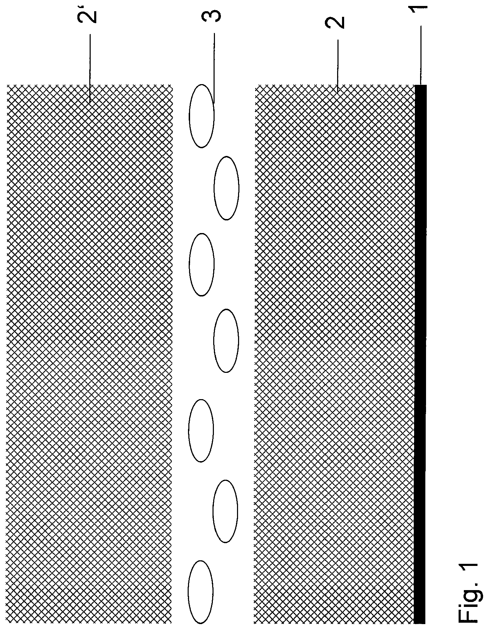

Fig. 1 einen Querschnitt durch eine einzelne Membranbahn

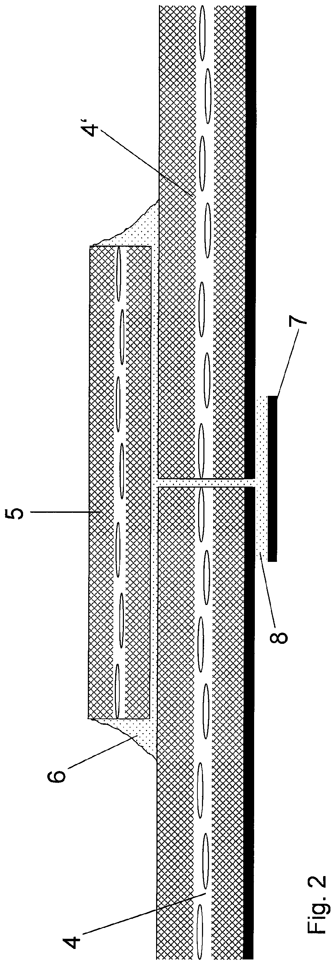

Fig. 2 einen Querschnitt durch eine Nahtkonstruktion

In Verbindung mit diesen Figuren gilt folgende Bezugszeichenliste:
- **1**: Außenschicht
- **2, 2'**: Elastomerschicht
- **3**: Gelegeschicht oder Gewebeschicht oder Gewirkeschicht
- **4, 4'**: Membranbahn
- **5**: aufliegende Platte (Streifen)
- **6**: erste Kautschukmatrix
- **7**: aufliegende Schicht
- **8**: zweite Kautschukmatrix

## Patentansprüche

1. Membran, **dadurch gekennzeichnet, dass** sie aus wenigstens zwei einzelnen Membranbahnen besteht, die durch wenigstens eine Nahtkonstruktion miteinander verbunden sind, wobei jede einzelne Membranbahn (4, 4') wenigstens eine Elastomerschicht (2, 2') und wenigstens eine Außenschicht (1) auf der Basis von PTFE enthält und wobei die Nahtkonstruktion aus wenigstens zwei einzelnen auf Stoß aneinander gelegten Membranbahnen (4, 4') aufgebaut ist, wobei gleichartige Schichten der einzelnen Membranbahnen (4, 4') jeweils auf Stoß aneinander gelegt sind, wobei die beiden Membranbahnen (4, 4') auf der einen Außenseite der Membran, auf der jeweils die Elastomerschichten (2, 2') der einzelnen Membranbahnen (4, 4') auf Stoß aneinander gelegt sind, diese über eine aufliegende Platte (5) und über eine erste Kautschukmatrix (6) miteinander verbunden sind und auf der anderen Außenseite, auf der jeweils die Außenschichten (1) der einzelnen Membranbahnen (4, 4') auf Stoß aneinander gelegt sind, diese über eine aufliegende Schicht (7), welche auf PTFE-Basis ist, und über eine zweite Kautschukmatrix (8) miteinander verbunden sind und wobei die aufliegende Schicht (7) beidseitig geätzt ist.

2. Membran nach Anspruch 1, **dadurch gekennzeichnet, dass** die Anzahl der Schichten innerhalb der einzelnen Membranbahn (4, 4') zwischen zwei und sechs beträgt.

3. Membran nach einem der Ansprüche 1 oder 2, **dadurch gekennzeichnet, dass** jede einzelne Membranbahn (4, 4') zusätzlich wenigstens eine Gelegeschicht oder Gewebeschicht oder Gewirkeschicht (3) enthält, wobei die Gelegeschicht oder Gewebeschicht oder Gewirkeschicht (3) auf wenigstens einer Seite mit einer Elastomerschicht (2, 2') verbunden ist.

4. Membran nach einem der Ansprüche 1 bis 3, **dadurch gekennzeichnet, dass** die Elastomerschicht (2, 2') eine Kautschukmischung auf der Basis von Chloroprenkautschuk und / oder Ethylen-Propylen-Kautschuk und / oder Ethylen-Propylen-Dien-Kautschuk und / oder Nitrilkautschuk und / oder Halonitrilkautschuk und / oder Fluorkautschuk und / oder Silikonkautschuk und / oder chloriertem Polyethylen und / oder chlorsulfoniertem Polyethylen ist.

5. Membran nach einem der Ansprüche 1 bis 4, **dadurch gekennzeichnet, dass** die Außenschicht (1) beidseitig geätzt ist.

6. Membran nach Anspruch 1, **dadurch gekennzeichnet, dass** die aufliegende Platte (5) und / oder die aufliegende Schicht (7) jeweils eine Breite von 2 bis 20 cm hat bzw. haben.

7. Membran nach einem der Ansprüche 1 oder 6, **dadurch gekennzeichnet, dass** die zweite Kautschukmatrix (8) Fluorkautschuk enthält.

8. Membran nach einem der Ansprüche 1 oder 6 oder 7, **dadurch gekennzeichnet, dass** die aufliegende Platte (5) an der auf die einzelnen Membranbahnen (4, 4') zugewandten Seite frei von Materialien auf PTFE-Basis ist.

9. Membran nach einem der Ansprüche 1 bis 8, **dadurch gekennzeichnet, dass** sie hohlzylinderartig oder torusartig oder konusartig gestaltet ist.

10. Membran nach einem der Ansprüche 1 bis 9, **dadurch gekennzeichnet, dass** sie einen Gesamtumfang von 5 bis 300 m hat.

11. Verfahren zur Herstellung einer Membran gemäß einem der Ansprüche 1 bis 10, **gekennzeichnet durch** wenigstens folgende Verfahrensschritte:
- Herstellen von wenigstens zwei einzelnen Membranbahnen (4, 4'), wobei die Außenschicht (1), welche auf PTFE-Basis ist, der einzelnen Membranbahn (4, 4'), während der Vulkanisation der einzelnen Membranbahn (4, 4'), in Form einer Folie aufgebracht wird;
- Vulkanisation der einzelnen Membranbahn (4, 4');
- Auf Stoß aneinander Legen der einzelnen vulkanisierten Membranbahnen (4, 4'), wobei gleichartige Schichten der einzelnen vulkanisierten Membranbahnen (4, 4') jeweils auf Stoß aneinander gelegt werden;
- Verbinden der einzelnen vulkanisierten Membranbahnen (4, 4') über eine Nahtkonstruktion derart, dass auf der einen Außenseite der Membran, auf der jeweils die Elastomerschichten (2, 2') der einzelnen Membranbahnen (4, 4') auf Stoß aneinander gelegt sind, eine Platte (5) und eine erste Kautschukmatrix (6) aufgebracht werden und auf der anderen Außenseite, auf der jeweils die Außenschichten (1), welche auf PTFE-Basis sind, der einzelnen Membranbahnen (4, 4') auf Stoß aneinander gelegt sind, eine Schicht (7), welche auf PTFE-Basis ist, und eine zweite Kautschukmatrix (8) aufgebracht werden;
- Vulkanisation der Nahtkonstruktion durch Heißpressen.

12. Verfahren zur Herstellung einer Membran gemäß Anspruch 11, **dadurch gekennzeichnet, dass** die Vulkanisation der einzelnen Membranbahn (4, 4') und / oder die Vulkanisation der Nahtkonstruktion bei einer Temperatur zwischen 140 und 190 °C stattfindet bzw. stattfinden.

13. Verwendung einer Membran nach einem der Ansprüche 1 bis 10 als Gasspeichermembran.

## Claims

1. Membrane, **characterized in that** it is composed of at least two individual membrane webs which have been connected to one another via at least one seam structure, where each individual membrane web (4, 4') comprises at least one elastomer layer (2, 2') and at least one external layer (1) based on PTFE and where the seam structure is composed of at least two individual membrane webs (4, 4') that have been placed in mutual abutment, where layers of the same type of the individual membrane webs (4, 4') have respectively been placed in mutual abutment, and where, on that external side of the membrane at which the elastomer layers (2, 2') of individual membrane webs (4, 4') have respectively been placed in mutual abutment, the two membrane webs (4, 4') have been connected to one another by way of a superposed sheet (5) and by way of a first rubber matrix (6), and on the other external side, at which the external layers (1) of the individual membrane webs (4, 4') have been respectively placed in mutual abutment, these have been connected to one another by way of a superposed layer (7) based on PTFE, and by way of a second rubber matrix (8) and where the superposed layer (7) has been bilaterally etched.

2. Membrane according to Claim 1, **characterized in that** the number of the layers within the individual membrane web (4, 4') is from two to six.

3. Membrane according to either of Claims 1 and 2, **characterized in that** each individual membrane web (4, 4') also comprises at least one laid scrim layer or woven layer or knitted layer (3), where the laid scrim layer or woven layer or knitted layer (3) has been connected on at least one side to an elastomer layer (2, 2').

4. Membrane according to any of Claims 1 to 3, **characterized in that** the elastomer layer (2, 2') is a rubber mixture based on chloroprene rubber and/or on ethylene-propylene rubber and/or on ethylene-propylene-diene rubber and/or on nitrile rubber and/or on halonitrile rubber and/or on fluoro rubber and/or on silicone rubber and/or on chlorinated polyethylene and/or on chlorosulfonated polyethylene.

5. Membrane according to any of Claims 1 to 13, **characterized in that** the external layer (1) has been bilaterally etched.

6. Membrane according to Claim 1, **characterized in that** the width of the superposed sheet (5) and/or of the superposed layer (7) is respectively from 2 to 20 cm.

7. Membrane according to either of Claims 1 and 6, **characterized in that** the second rubber matrix (8) comprises fluoro rubber.

8. Membrane according to any of Claims 1, 6 and 7, **characterized in that** the superposed sheet (5) is free from PTFE-based materials on that side facing toward the individual membrane webs (4, 4').

9. Membrane according to any of Claims 1 to 8, **characterized in that** its shape is hollow-cylindrical or toroidal, or conical.

10. Membrane according to any of Claims 1 to 9, **characterized in that** its total circumference is from 5 to 300 m.

11. Process for producing a membrane according to any of Claims 1 to 10, **characterized by** at least the following steps:
- production of at least two individual membrane webs (4, 4'), where the external PTFE-based layer (1) of the individual membrane web (4, 4') is applied in the form of a foil during the vulcanization of the individual membrane web (4, 4');
- vulcanization of the individual membrane web (4, 4');
- placing the individual vulcanized membrane webs (4, 4') in mutual abutment, where layers of the same type of the individual vulcanized membrane webs (4, 4') are respectively placed in mutual abutment;
- connection of the individual vulcanized membrane webs (4, 4') by way of a seam structure in such a way that, on that external side of the membrane at which the elastomer layers (2, 2') of the individual membrane webs (4, 4') have respectively been placed in mutual abutment, a sheet (5) and a first rubber matrix (6) are applied, and on the other external side at which the PTFE-based external layers (1) of the individual membrane webs (4, 4') have respectively been placed in mutual abutment, a layer (7) which is based on PTFE, and a second rubber matrix (8) are applied;
- vulcanization of the seam structure via hot-pressing.

12. Process for producing a membrane according to Claim 11, **characterized in that** the vulcanization of the individual membrane web (4, 4') and/or the vulcanization of the seam structure take(s) place at a temperature from 140 to 190°C.

13. Use of a membrane according to any of Claims 1 to 10 as gas-storage membrane.

## Revendications

1. Membrane, **caractérisée en ce qu'**elle est constituée par au moins deux bandes de membrane individuelles qui sont reliées les unes avec les autres par au moins une construction de soudure, chaque bande de membrane individuelle (4, 4') contenant au moins une couche élastomère (2, 2') et au moins une couche extérieure (1) à base de PTFE, et la construction de soudure étant formée par au moins deux bandes de membrane individuelles (4, 4') disposées bord à bord les unes des autres, des couches similaires des bandes de membrane individuelles (4, 4') étant à chaque fois disposées bord à bord les unes des autres, les deux bandes de membrane (4, 4') sur un côté extérieur de la membrane, sur lequel les couches élastomères (2, 2') des bandes de membrane individuelles (4, 4') sont à chaque fois disposées bord à bord les unes des autres, étant reliées les unes avec les autres par une plaque superposée (5) et par une première matrice de caoutchouc (6), et sur l'autre côté extérieur, sur lequel les couches extérieures (1) des bandes de membrane individuelles (4, 4') sont à chaque fois disposées bord à bord les unes des autres, étant reliées les unes avec les autres par une couche superposée (7), qui est à base de PTFE, et par une deuxième matrice de caoutchouc (8), et la couche superposée (7) étant gravée des deux côtés.

2. Membrane selon la revendication 1, **caractérisée en ce que** le nombre de couches à l'intérieur des bandes de membrane individuelles (4, 4') est compris entre deux et six.

3. Membrane selon l'une quelconque des revendications 1 et 2, **caractérisée en ce que** chaque bande de membrane individuelle (4, 4') contient en outre au moins une couche de nappe ou une couche de tissu ou une couche de tricot (3), la couche de nappe ou la couche de tissu ou la couche de tricot (3) étant reliée sur au moins un côté avec une couche élastomère (2, 2').

4. Membrane selon l'une quelconque des revendications 1 à 3, **caractérisée en ce que** la couche élastomère (2, 2') est un mélange de caoutchouc à base de caoutchouc de chloroprène et/ou de caoutchouc d'éthylène-propylène et/ou de caoutchouc d'éthylène-propylène-diène et/ou de caoutchouc de nitrile et/ou de caoutchouc d'halonitrile et/ou de caoutchouc fluoré et/ou de caoutchouc de silicone et/ou de polyéthylène chloré et/ou de polyéthylène chlorosulfoné.

5. Membrane selon l'une quelconque des revendications 1 à 4, **caractérisée en ce que** la couche extérieure (1) est gravée des deux côtés.

6. Membrane selon la revendication 1, **caractérisée en ce que** la plaque superposée (5) et/ou la couche superposée (7) ont chacune une largeur de 2 à 20 cm.

7. Membrane selon l'une quelconque des revendications 1 et 6, **caractérisée en ce que** la deuxième matrice de caoutchouc (8) contient un caoutchouc fluoré.

8. Membrane selon l'une quelconque des revendications 1, 6 et 7, **caractérisée en ce que** la plaque superposée (5) est exempte de matériaux à base de PTFE sur le côté orienté vers les bandes de membrane individuelles (4, 4').

9. Membrane selon l'une quelconque des revendications 1 à 8, **caractérisée en ce qu'**elle est configurée en forme de cylindre creux ou en forme de tore ou en forme de cône.

10. Membrane selon l'une quelconque des revendications 1 à 9, **caractérisée en ce qu'**elle a une périphérie totale de 5 à 300 m.

11. Procédé de fabrication d'une membrane selon l'une quelconque des revendications 1 à 10, **caractérisé par** au moins les étapes de procédé suivantes :
- la fabrication d'au moins deux bandes de membrane individuelles (4, 4'), la couche extérieure (1), qui est à base de PTFE, des bandes de membrane individuelles (4, 4') étant appliquée sous la forme d'une feuille pendant la vulcanisation des bandes de membrane individuelles (4, 4') ;
- la vulcanisation des bandes de membrane individuelles (4, 4') ;
- la disposition bord à bord les unes des autres des bandes de membrane individuelles vulcanisées (4, 4'), des couches similaires des bandes de membrane individuelles vulcanisées (4, 4') étant à chaque fois disposées bord à bord les unes des autres ;
- la liaison des bandes de membrane individuelles vulcanisées (4, 4') par une construction de soudure de telle sorte que, sur un côté extérieur de la membrane, sur lequel les couches élastomères (2, 2') des bandes de membrane individuelles (4, 4') sont à chaque fois disposées bord à bord les unes des autres, une plaque (5) et une première matrice de caoutchouc (6) soient appliquées et, sur l'autre côté extérieur, sur lequel les couches extérieures (1), qui sont à base de PTFE, des bandes de membrane individuelles (4, 4'), sont disposées bord à bord les unes des autres, une couche (7), qui est à base de PTFE, et une deuxième matrice de caoutchouc (8) soient appliquées ;
- la vulcanisation de la construction de soudure par compression à chaud.

12. Procédé de fabrication d'une membrane selon la revendication 11, **caractérisé en ce que** la vulcanisation des bandes de membrane individuelles (4, 4') et/ou la vulcanisation de la construction de soudure ont lieu à une température comprise entre 140 et 190 °C.

13. Utilisation d'une membrane selon l'une quelconque des revendications 1 à 10 en tant que membrane de stockage de gaz.
